# EUROPEAN PATENT APPLICATION

(11) **EP 4 514 059 A2**
(43) Date of publication of application: **26.02.2025**
(21) Application number: 25150531.9
(22) Date of filing: 14.01.2021
(51) Int. Cl.: H04W 80/02

(54) **METHODS AND APPARATUSES FOR MULTICAST AND BROADCAST SERVICES**

(62) Divisional of application: 21918385.2
(71) Applicant: Lenovo (Beijing) Limited, Beijing 100085 (CN)
(72) Inventor: DAI, Mingzeng, Shanghai, 201315 (CN); ZHANG, Congchi, Shanghai, 201204 (CN); WU, Lianhai, Beijing, 100028 (CN); WANG, Haiming, Beijing, 100011 (CN); YAN, Le, Shanghai, 200120 (CN)
(74) Representative: Openshaw & Co.

(57) **Abstract**

Embodiments of the present application relate to methods and apparatuses for multicast and broadcast services (MBS). An exemplary method performed by a node of a wireless network to provide a multicast and broadcast service (MBS) associated with a user equipment (UE) of the wireless network may include: determining whether to activate or deactivate a point-to-point (PTP) mode to provide the MBS to the UE; and transmitting a data transmission indication via a user plane protocol of a network interface in the wireless network to activate or deactivate the PTP mode. Embodiments of the present application can support more efficient dynamic switching between PTP mode and point-to-multipoint (PTM) mode for MBS and/or distinguish new transmission data and retransmission data for MBS.

## Description

### TECHNICAL FIELD

Embodiments of the present application generally relate to wireless communication technologies, and especially to methods and apparatuses for multicast and broadcast services (MBS).

### BACKGROUND

In new radio (NR) Rel-17, MBS plans to focus on a small area mixed mode multicast (also referred to as Objective A in the TR 23.757). The Objective A is about enabling general MBS services over 5G system (5GS) and the identified use cases that could benefit from this feature. These use cases include but are not limited to: public safety and mission critical, vehicle to everything (V2X) applications, transparent internet protocol version 4 (IPv4)/internet protocol version 6 (IPv6) multicast delivery, internet protocol television (IPTV), software delivery over wireless, group communications and internet of things (IoT) applications. In these use cases, the requirements for service continuity and reliability have changed.

In order to support the above requirements, one objective introduced in RP-201038 is: specifying support for dynamic change of Broadcast/Multicast service delivery between multicast (for example, point-to-multipoint (PTM) mode) and unicast (for example, point-to-point (PTP) mode) with service continuity for a given user equipment (UE). Since MBS PTP-PTM switching is expected to be dynamic, using control signaling to indicate the switching may cause signaling overhead and delay. Then, how to support more efficient dynamic PTP-PTM switching for MBS needs to be further studied.

In addition, in order to improve the reliability, packet data convergence protocol (PDCP) retransmission may be supported for an MBS session or a radio bearer. In this case, how to distinguish new transmission data and retransmission data needs to be further studied.

Given the above, the industry desires an improved technology for multicast and broadcast services, so as to support more efficient dynamic PTP-PTM switching for MBS and/or distinguish new transmission data and retransmission data for MBS.

### SUMMARY OF THE DISCLOSURE

Embodiments of the present application at least provide a technical solution for multicast and broadcast services, which can at least support more efficient dynamic PTP-PTM switching for MBS and/or distinguish new transmission data and retransmission data for MBS.

In some embodiments of the present application, a method is performed by a node of a wireless network to provide an MBS associated with a UE of the wireless network. The method may include: determining one or more data transmission modes to provide the MBS to the UE, wherein the data transmission modes include at least a PTP mode and a PTM mode; and transmitting a data transmission indication via a user plane protocol of a network interface in the wireless network, to activate or deactivate the one or more data transmission modes (i.e. the PTP mode or the PTM mode).

In other embodiments of the present application, a method performed by a node of a wireless network to provide an MBS associated with a UE of the wireless network may include: determining whether to activate or deactivate a PTP mode to provide the MBS to the UE; and transmitting a data transmission indication via a user plane protocol of a network interface in the wireless network to activate or deactivate the PTP mode. The node may be a base station (BS), a central unit (CU) of the BS, or a distributed unit (DU) of the BS.

In some embodiments, the data transmission indication is transmitted via an individual tunnel for PTP transmission.

In an embodiment, the data transmission indication is transmitted in a frame via the user plane protocol, and the frame may further include at least one sequence number (SN) of at least one PDCP protocol data unit (PDU), and the method may further include: receiving the at least one PDCP PDU indicated by the at least one SN via the individual tunnel.

In an embodiment, the data transmission indication is transmitted in a frame via the user plane protocol, and the frame may further include an SN of a PDCP PDU, and the method may further include: starting data reception via the individual tunnel from the PDCP PDU indicated by the SN in the case that it is determined to activate the PTP mode; or stopping data reception via the individual tunnel from the PDCP PDU indicated by the SN in the case that it is determined to deactivate the PTP mode.

In some embodiments, the data transmission indication is transmitted via a shared tunnel for PTP transmission and PTM transmission.

In an embodiment, the data transmission indication is transmitted in a frame via the user plane protocol and includes an identity (ID) associated with the UE.

In another embodiment, the data transmission indication is transmitted in a frame via the user plane protocol, and the frame may further include an ID associated with the UE.

In yet another embodiment, the frame may further include an SN of a PDCP PDU.

According to some embodiments of the present application, a method performed by a node of a wireless network to provide an MBS associated with a UE of the wireless network may include: receiving a data transmission indication via a user plane protocol of a network interface in the wireless network to activate or deactivate a data transmission mode to provide the MBS to the UE, wherein the data transmission mode includes at least a PTP mode or a PTM mode.

According to some other embodiments of the present application, a method performed by a node of a wireless network to provide an MBS associated with a UE of the wireless network may include: receiving a data transmission indication via a user plane protocol of a network interface in the wireless network to activate or deactivate a PTP mode to provide the MBS to the UE. The node may be a BS, a CU of the BS, or a DU of the BS.

In some embodiments, the data transmission indication is received via an individual tunnel for PTP transmission.

In an embodiment, the data transmission indication is received in a frame via the user plane protocol, and the frame may further include at least one SN of at least one PDCP PDU, and the method may further include: transmitting the at least one PDCP PDU indicated by the at least one SN via the individual tunnel.

In an embodiment, the data transmission indication is received in a frame via the user plane protocol, and the frame may further include an SN of a PDCP PDU, and the method may further include: starting data transmission via the individual tunnel from the PDCP PDU indicated by the SN in the case that the data transmission indication indicates to activate the PTP mode; or stopping data transmission via the individual tunnel from the PDCP PDU indicated by the SN in the case that the data transmission indication indicates to deactivate the PTP mode.

In some embodiments, the data transmission indication is received via a shared tunnel for PTP transmission and PTM transmission.

In an embodiment, the data transmission indication is received in a frame via the user plane protocol and includes an ID associated with the UE.

In another embodiment, the data transmission indication is received in a frame via the user plane protocol, and the frame may further include an ID associated with the UE.

In yet another embodiment, the frame may further include an SN of a PDCP PDU, and the method may further include: starting data transmission to the UE via a PTP radio link control (RLC) bearer from the PDCP PDU indicated by the SN in the case that the data transmission indication indicates to activate the PTP mode; or stopping data transmission to the UE via the PTP RLC bearer from the PDCP PDU indicated by the SN in the case that the data transmission indication indicates to deactivate the PTP mode.

According to some other embodiments of the present application, a method may include: transmitting a set of data packets associated with an MBS session; receiving a status report for the set of data packets; and retransmitting a subset of the set of data packets in response to the status report indicating that the subset is not successfully received by a UE.

In some embodiments, the method may further include: transmitting an indication for establishing a retransmission tunnel; and receiving transport network layer (TNL) information of the retransmission tunnel.

In an embodiment, the TNL information may include an internet protocol (IP) address and a general packet radio service (GPRS) tunneling protocol (GTP) user plane (GTP-U) tunnel endpoint identifier (TEID).

In another embodiment, the subset is retransmitted via the retransmission tunnel.

In some embodiments, the subset is retransmitted via a PTP tunnel for both PTP new data packet transmission and PTP data packet retransmission.

In an embodiment, the method may further include: transmitting a retransmission indication in a frame of a user plane protocol of each data packet in the retransmitted subset to indicate that the corresponding data packet is a retransmitted data packet.

In some embodiments, the subset is retransmitted via a shared tunnel for PTM transmission, PTP new data packet transmission, and PTP data packet retransmission.

In an embodiment, the method may further include: transmitting an ID associated with the UE in a frame via a user plane protocol.

In another embodiment, the frame may further include SN information associated with the retransmitted subset.

In yet another embodiment, the SN information may include a respective SN associated with each data packet in the retransmitted subset or an SN range associated with the retransmitted subset.

According to some other embodiments of the present application, a method may include: receiving a set of data packets associated with an MBS session; receiving retransmission of a subset of the set of data packets; and transmitting the retransmitted subset at a higher priority than new data packets.

In some embodiments, the method may further include: receiving an indication for establishing a retransmission tunnel; and transmitting TNL information of the retransmission tunnel.

In an embodiment, the TNL information may include an IP address and a GTP-U TEID.

In another embodiment, the retransmission of the subset is received via the retransmission tunnel, and the method may further include: identifying that the subset is retransmitted based on the TNL information.

In some embodiments, the retransmission of the subset is received via a PTP tunnel for both PTP new data packet transmission and PTP data packet retransmission.

In an embodiment, the method may further include: receiving a retransmission indication in a frame of a user plane protocol of each data packet in the retransmitted subset; and identifying that the corresponding data packet in the retransmitted subset is a retransmitted data packet based on the retransmission indication.

In some embodiments, the retransmission of the subset is received via a shared tunnel for PTM transmission, PTP new data packet transmission, and PTP data packet retransmission.

In an embodiment, the method may further include: receiving an ID associated with a UE in a frame via a user plane protocol, wherein the retransmitted subset is transmitted to the UE.

In another embodiment, the frame may further include SN information associated with the retransmitted subset, and the method may further include: identifying that each data packet in the retransmitted subset is a retransmitted data packet based on the SN information.

In yet another embodiment, the SN information may include a respective SN associated with each data packet in the retransmitted subset or an SN range associated with the retransmitted subset.

Some embodiments of the present application also provide an apparatus including: at least one non-transitory computer-readable medium having computer executable instructions stored therein, at least one receiving circuitry; at least one transmitting circuitry; and at least one processor coupled to the at least one non-transitory computer-readable medium, the at least one receiving circuitry and the at least one transmitting circuitry. The computer executable instructions are programmed to implement any method as stated above with the at least one receiving circuitry, the at least one transmitting circuitry and the at least one processor.

### BRIEF DESCRIPTION OF THE DRAWINGS

In order to describe the manner in which advantages and features of the application can be obtained, a description of the application is rendered by reference to specific embodiments thereof, which are illustrated in the appended drawings. These drawings depict only example embodiments of the application and are not therefore to be considered limiting of its scope.
FIG. 1 is a schematic diagram illustrating an exemplary wireless communication system according to some embodiments of the present application;
FIG. 2 is a schematic diagram illustrating an internal structure of a base station (BS) according to some embodiments of the present application;
FIG. 3 is a schematic diagram illustrating a user plane protocol according to some embodiments of the present application;
FIG. 4 is a flow chart illustrating a method for MBS according to some embodiments of the present application;
FIG. 5 illustrates an example of transmitting an indication to activate or deactivate a PTP mode from a distributed unit (DU) to a central unit (CU) according to some embodiments of the present application;
FIG. 6 illustrates an example of transmitting an indication to activate or deactivate a PTP mode from a CU to a DU according to some embodiments of the present application;
FIG. 7 is a flow chart illustrating a method for MBS according to some other embodiments of the present application;
FIG. 8 illustrates an example of data retransmission according to some embodiments of the present application;
FIG. 9 illustrates another example of data retransmission according to some other embodiments of the present application;
FIG. 10 illustrates another example of data retransmission according to some other embodiments of the present application;
FIG. 11 illustrates another example of data retransmission according to some other embodiments of the present application; and
FIG. 12 illustrates a simplified block diagram of an apparatus for MBS according to some embodiments of the present application.

### DETAILED DESCRIPTION

The detailed description of the appended drawings is intended as a description of the currently preferred embodiments of the present application and is not intended to represent the only form in which the present application may be practiced. It is to be understood that the same or equivalent functions may be accomplished by different embodiments that are intended to be encompassed within the spirit and scope of the present application.

Reference will now be made in detail to some embodiments of the present application, examples of which are illustrated in the accompanying drawings. To facilitate understanding, embodiments are provided under specific network architecture and new service scenarios, such as 3rd generation partnership project (3GPP) 5G, 3GPP long term evolution (LTE) Release 8 and so on. Persons skilled in the art know very well that, with the development of network architecture and new service scenarios, the embodiments in the present application are also applicable to similar technical problems; and moreover, the terminologies recited in the present application may change, which should not affect the principle of the present application.

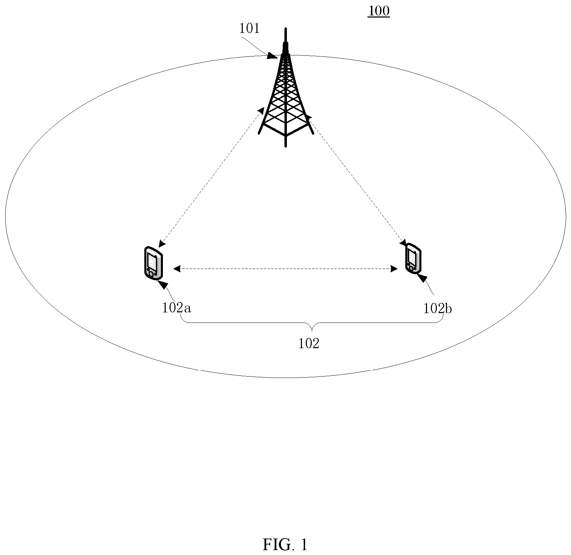

FIG. 1 is a schematic diagram illustrating an exemplary wireless communication system 100 according to an embodiment of the present application.

As shown in FIG. 1, the wireless communication system 100 includes at least one BS 101 and at least one UE 102. In particular, the wireless communication system 100 includes one BS 101 and two UEs 102 (e.g., a UE 102a and a UE 102b) for illustrative purpose. Although a specific number of BS 101 and UEs 102 are depicted in FIG. 1, it is contemplated that any number of BSs 101 and UEs 102 may be included in the wireless communication system 100.

The BS 101 may also be referred to as an access point, an access terminal, a base, a macro cell, a node-B, an enhanced node B (eNB), a gNB, a home node-B, a relay node, or a device, or described using other terminology used in the art. The BS 101 is generally part of a radio access network that may include a controller communicably coupled to the BS 101.

The UE(s) 102 may include computing devices, such as desktop computers, laptop computers, personal digital assistants (PDAs), tablet computers, smart televisions (e.g., televisions connected to the Internet), set-top boxes, game consoles, security systems (including security cameras), vehicle on-board computers, network devices (e.g., routers, switches, and modems), or the like. According to an embodiment of the present application, the UE(s) 102 may include a portable wireless communication device, a smart phone, a cellular telephone, a flip phone, a device having a subscriber identity module, a personal computer, a selective call receiver, or any other device that is capable of sending and receiving communication signals on a wireless network. In some embodiments, the UE(s) 102 may include wearable devices, such as smart watches, fitness bands, optical head-mounted displays, or the like. Moreover, the UE(s) 102 may be referred to as a subscriber unit, a mobile, a mobile station, a user, a terminal, a mobile terminal, a wireless terminal, a fixed terminal, a subscriber station, a user terminal, or a device, or described using other terminology used in the art.

The wireless communication system 100 is compatible with any type of network that is capable of sending and receiving wireless communication signals. For example, the wireless communication system 100 is compatible with a wireless communication network, a cellular telephone network, a time division multiple access (TDMA)-based network, a code division multiple access (CDMA)-based network, an orthogonal frequency division multiple access (OFDMA)-based network, an LTE network, a 3GPP-based network, a 3GPP 5G network, a satellite communications network, a high altitude platform network, and/or other communications networks.

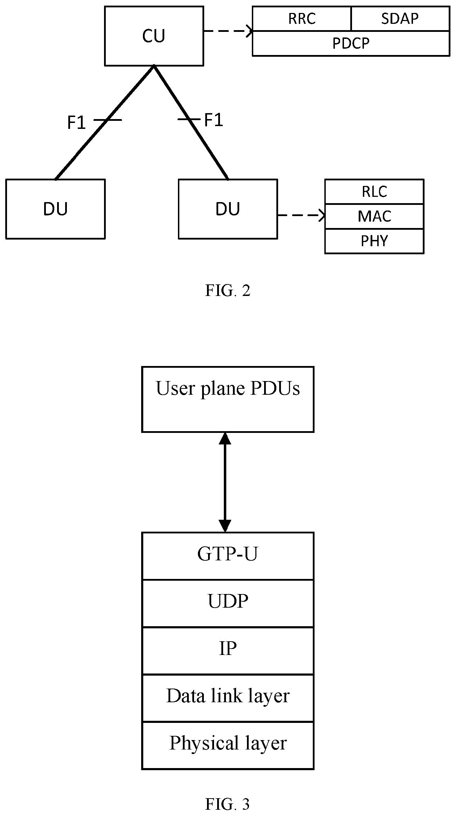

FIG. 2 is a schematic diagram illustrating an internal structure of a BS according to some embodiments of the present application.

Referring to FIG. 2, the internal structure of a BS (e.g., the BS 101 in FIG. 1) may be split into a central unit (CU) and at least one distributed unit (DU) (e.g., two DUs shown in FIG. 2). Although a specific number of DUs are depicted in FIG. 2, it is contemplated that any number of DUs may be included in the BS.

The CU and DU are connected with each other by an interface called F 1 as specified in 3GPP standard documents. The radio resource control (RRC) layer functionality, the service data adaptation protocol (SDAP) functionality, and the PDCP layer functionality are located in the CU. The radio link control (RLC) layer functionality, the medium access control (MAC) layer functionality, and the physical (PHY) layer functionality are located in the DU.

A NR user plane protocol is located in the user plane of the radio network layer over either the Xn interface or the X2 interface or the F1 interface as specified in 3GPP standard documents. The NR user plane protocol may be used to convey control information related to the user data flow management of data radio bearers. Each NR user plane protocol instance is associated to one data radio bearer only. In addition, there is one NR user plane protocol instance per GTP-U tunnel.

For example, FIG. 3 is a schematic diagram illustrating a user plane protocol according to some embodiments of the present application.

Referring to FIG. 3, the user plane protocol may include a physical layer, a data link layer, an internet protocol (IP) layer, a user datagram protocol (UDP) layer, a GTP-U layer, and a user plane protocol layer. In the GTP-U layer, the user plane protocol data unit (PDU) in the user plane protocol layer may be included in the GTP-U extension header (also referred to as "NR radio access network (RAN) container") as specified in 3GPP standard document TS 29.281.

The user plane protocol layer may be used for flow control of user data packets transferred from the node hosting PDCP (e.g., the CU or the CU-UP) to the corresponding node (e.g., the DU). For example, the user plane protocols may include the following information:
- Information of success in sequence delivery of PDCP PDUs to the UE from the corresponding node for user data associated with a specific data radio bearer;
- Information of the currently desired buffer size at the corresponding node for transmitting to the UE user data associated with a specific data radio bearer; and
- User plane specific sequence number information for user data transferred from the node hosting PDCP to the corresponding node for a specific data radio bearer.

The BS (e.g., BS 101) may transmit same MBS data to one or more UEs (e.g., UE 102a and UE 102b). For example, the MBS data may be transmitted to the UE 102a and UE 102b via a PTM mode. In another example, the MBS data may be respectively transmitted to the UE 102a and UE 102b via a PTP mode.

The PTM mode may refer to transmitting same MBS data to one or more UEs (e.g., UE 102a and UE 102b) via a multicast mode. For the PTM mode, the MBS data may be transmitted to the one or more UEs via a multicast data radio bearer (M-DRB). The M-DRB may refer to a radio bearer or an RLC bearer for data transmission via a PTM mode. The M-DRB is scrambled by a group radio network temporary identifier (G-RNTI) in at least one cell. The M-DRB can also be named as multicast radio bearer (MRB).

The PTP mode may refer to transmitting MBS data to a UE (e.g., UE 102a or UE 102b) via a unicast mode. For the PTP mode, the MBS data may be transmitted to the UE via a unicast data radio bearer (U-DRB). The U-DRB may refer to a radio bearer or an RLC bearer for data transmission via a PTP mode. The U-DRB is scrambled by a cell radio network temporary identifier (C-RNTI). The U-DRB can also be named as data radio bearer (DRB).

In 5G MBS, the PTP-PTM dynamic switching is one of key features. The BS makes the decision on using a PTP mode or PTM mode over the radio. In case of CU-DU split scenario as shown in FIG. 2, whether the CU or DU makes the decision on using a PTP mode or PTM mode has not been determined in 3GPP standard documents. Since the PTP-PTM switching is expected to be dynamic, using control signaling to indicate the switching may cause signaling overhead and delay between the CU and the DU. In this case, how to support more efficient dynamic switching between the PTP mode and the PTM mode needs to be further studied.

In addition, in order to improve the reliability, PDCP retransmission may be supported for an MBS session or radio bearer. For the user plane protocol of F1 interface (i.e., F1-U), there are two different types of data, i.e., new transmission data (e.g., new transmission PDCP PDU) or retransmission data (e.g., retransmission PDCP PDU). In the case that both types of data exist, the DU should transmit the retransmission data to the UE first. In this case, how to distinguish the new transmission data and the retransmission data by the DU needs to be further studied.

Embodiments of the present application may provide technical solutions for MBS, which can at least support more efficient dynamic PTP-PTM switching for MBS and/or distinguish new transmission data and retransmission data for MBS. More details on embodiments of the present application will be illustrated in the following text in combination with the appended drawings.

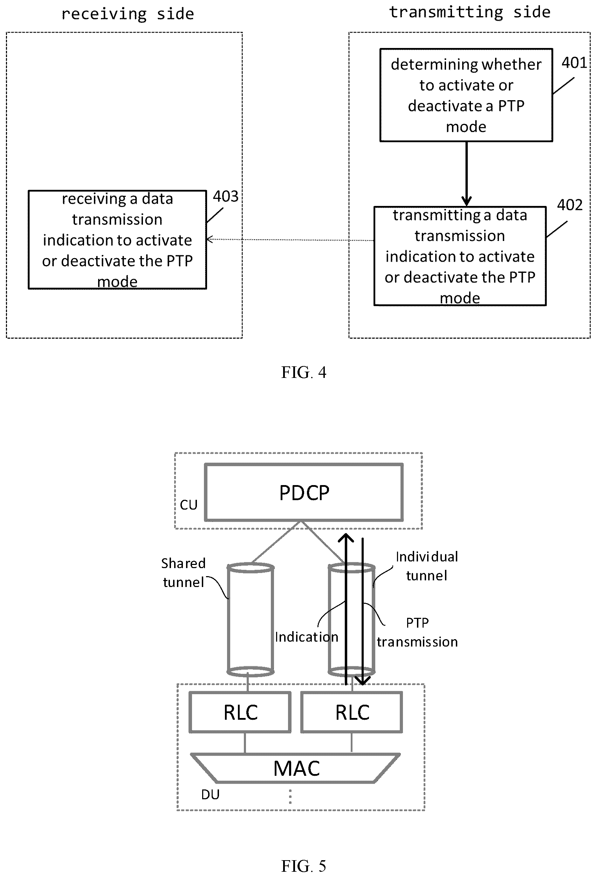

FIG. 4 is a flow chart illustrating a method for MBS according to some embodiments of the present application. Although the method is illustrated in a system level by a transmitting side and a receiving side, persons skilled in the art can understand that the method implemented in the transmitting side and that implemented in the receiving side can be separately implemented and incorporated by other apparatus with the like functions.

In the exemplary method shown in FIG. 4, in step 401, the transmitting side may determine whether to activate or deactivate a PTP mode to provide an MBS to a UE. The transmitting side may be a CU or a DU as shown in FIG. 2. Before step 401, the MBS (e.g., the MBS data) may be provided to the UE by a PTM mode and/or a PTP mode, or the MBS may have not been provided to the UE by any mode (e.g., the data transmission of the MBS to the UE may have not started). Whether to activate or deactivate a PTP mode may be determined based on information such as quality of service (QoS) requirements for the MBS session, number of joined UEs for the MBS session, UE individual feedback on reception quality, and/or other criteria.

Then, in step 402, the transmitting side may transmit a data transmission indication to activate or deactivate the PTP mode to the receiving side via a user plane protocol (e.g., user plane protocol as shown in FIG. 3) of a network interface (e.g., F1 interface) between the transmitting side and the receiving side. For example, in the case that the transmitting side determines to activate the PTP mode, the transmitting side may transmit the data transmission indication to activate the PTP mode. In the case that the transmitting side determines to deactivate the PTP mode, the transmitting side may transmit the data transmission indication to deactivate the PTP mode.

The data transmission indication to activate or deactivate the PTP mode may be used to switch between the PTP and PTM modes. For example, the data transmission indication to activate the PTP mode may be used to switch from the PTM mode to the PTP mode for data transmission to the UE or switch from the PTM mode to both the PTM and PTP modes for data transmission or activate the PTP mode. The data transmission indication to deactivate the PTP mode may be used to switch from the PTP mode to the PTM mode for data transmission to the UE or deactivate the PTP mode. By transmitting the data transmission indication via the user plane protocol, signalling overhead for PTP-PTM switching may be reduced and more efficient dynamic switching between PTP mode and PTM mode can be supported.

The receiving side may also be a CU or a DU as shown in FIG. 2. In the case that the transmitting side is a CU, the receiving side may be a DU. In the case that the transmitting side is a DU, the receiving side may be a CU.

Consequently, at step 403, the receiving side may receive the data transmission indication to activate or deactivate the PTP mode via the user plane protocol of the network interface.

According to some embodiments, the transmitting side may be a DU and the receiving side may be a CU. FIG. 5 illustrates an example of transmitting an indication to activate or deactivate a PTP mode from a DU to a CU according to some embodiments of the present application.

For simplicity, the CU of a BS (e.g., BS 101) shown in FIG. 5 may include a PDCP entity and the DU of the BS shown in FIG. 5 may include two RLC entities and a MAC entity. However, persons skilled in the art can understand that the CU may also include RRC entity and SDAP entity as shown in FIG. 2 and the DU may also include a PHY entity as shown in FIG. 2.

Referring to FIG. 5, a shared tunnel for PTM transmission may be established between the CU and the DU. The shared tunnel may be used to transmit data (e.g., PDCP PDU) to the DU such that DU may transmit the data to one or more UEs (e.g., UE 102a and UE 102b) by a PTM mode. The data received from the shared tunnel may be delivered to one RLC entity of the two RLC entities for the PTM transmission. In an embodiment, the shared tunnel may be an F1-U GTP-U tunnel.

For a UE (e.g., UE 102a or UE 102b), an individual tunnel for PTP transmission may be established between the CU and the DU. The individual tunnel may be used to transmit data (e.g., PDCP PDU) to the DU such that the DU may transmit the data to the UE by a PTP mode. The data received from the individual tunnel by the DU may be delivered to the other RLC entity of the two RLC entities for the PTP transmission. That is, the PTM transmission and the PTP transmission may have two different RLC entities (or RLC bearers). In an embodiment, the individual tunnel may be an F1-U GTP-U tunnel.

In some embodiments, for a UE (e.g., UE 102a or UE 102b) to which data is being transmitted in a PTM mode, the DU may determine to activate a PTP mode. After determining to activate the PTP mode, the DU may transmit a data transmission indication to activate the PTP mode via the individual tunnel established for PTP transmission for the UE to the CU. The indication may be transmitted in a frame via the user plane protocol as shown in FIG. 2. In an embodiment, the frame may be a DL DATA DELIVERY STATUS frame as specified in 3GPP standard document TS 38.425. In another embodiment, the frame may be any other frame transmitted via the user plane protocol as shown in FIG. 2. For example, the data transmission indication may be a one-bit field in the frame.

In an embodiment, after receiving the data transmission indication to activate the PTP mode, the CU may start data transmission (e.g., start to transmit PDCP PDU(s)) of the MBS session or MBS radio bearer to the DU via the individual tunnel immediately. After receiving the PDCP PDU(s) transmitted from the individual tunnel, the DU may transmit the PDCP PDU(s) via a PTP leg (or via a PTP RLC bearer, or via an RLC entity for the PTP transmission) to the UE.

In another embodiment, in addition to the data transmission indication, the DU may also include at least one SN (or at least one count value) of at least one PDCP PDU in the frame. Then, after receiving the frame, the CU may transmit the at least one PDCP PDU indicated by the at least one SN (or at least one count value) via the individual tunnel to the DU. After receiving the at least one PDCP PDU transmitted from the individual tunnel, the DU may transmit the at least one PDCP PDU via a PTP leg (or via a PTP RLC bearer, or via an RLC entity for the PTP transmission) to the UE.

In yet another embodiment, in addition to the data transmission indication, the DU may also include an SN (or a count value) of a PDCP PDU in the frame. Then, after receiving the frame, the CU may start data transmission via the individual tunnel from the PDCP PDU indicated by the SN or the count value included in the frame. Also, the DU may start data reception via the individual tunnel from the PDCP PDU indicated by the SN. For example, assuming that the SN of PDCP PDU included in the frame is "5," after receiving the frame, the CU may transmit the PDCP PDU with an SN of "5" and its succeeding PDCP PDU(s) via the individual tunnel. After receiving the PDCP PDU(s) transmitted from the individual tunnel, the DU may transmit the PDCP PDU(s) via a PTP leg (or via a PTP RLC bearer, or via an RLC entity for the PTP transmission) to the UE.

In some other embodiments, for a UE (e.g., UE 102a or UE 102b) to which data is being transmitted in a PTP mode, the DU may determine to deactivate the PTP mode (i.e., switch from the PTP mode to the PTM mode). After determining to deactivate the PTP mode, the DU may transmit a data transmission indication to deactivate the PTP mode via the individual tunnel established for PTP transmission for the UE to the CU. The indication may be transmitted in a frame via the user plane protocol as shown in FIG. 2. In an embodiment, the frame may be a DL DATA DELIVERY STATUS frame as specified in 3GPP standard document TS 38.425. In another embodiment, the frame may be any other frame transmitted via the user plane protocol as shown in FIG. 2.

In an embodiment, after receiving the data transmission indication to deactivate the PTP mode, the CU may stop data transmission (e.g., stop to transmit PDCP PDU(s)) of the MBS session or MBS radio bearer to the DU via the individual tunnel immediately.

In another embodiment, in addition to the data transmission indication, the DU may also include an SN (or a count value) of a PDCP PDU in the frame. Then, after receiving the frame, the CU may stop data transmission via the individual tunnel from the PDCP PDU indicated by the SN or the count value included in the frame. Also, the DU may stop data reception via the individual tunnel from the PDCP PDU indicated by the SN. For example, assuming that the SN of PDCP PDU included in the frame is "5," after receiving the frame, the CU may not transmit the PDCP PDU with an SN of "5" and its succeeding PDCP PDU(s) via the individual tunnel.

The following Table 1 shows an example of a DL DATA DELIVERY STATUS frame, which includes the indication (e.g., the data transmission indication) to activate or deactivate the PTP mode and an SN of a PDCP PDU.

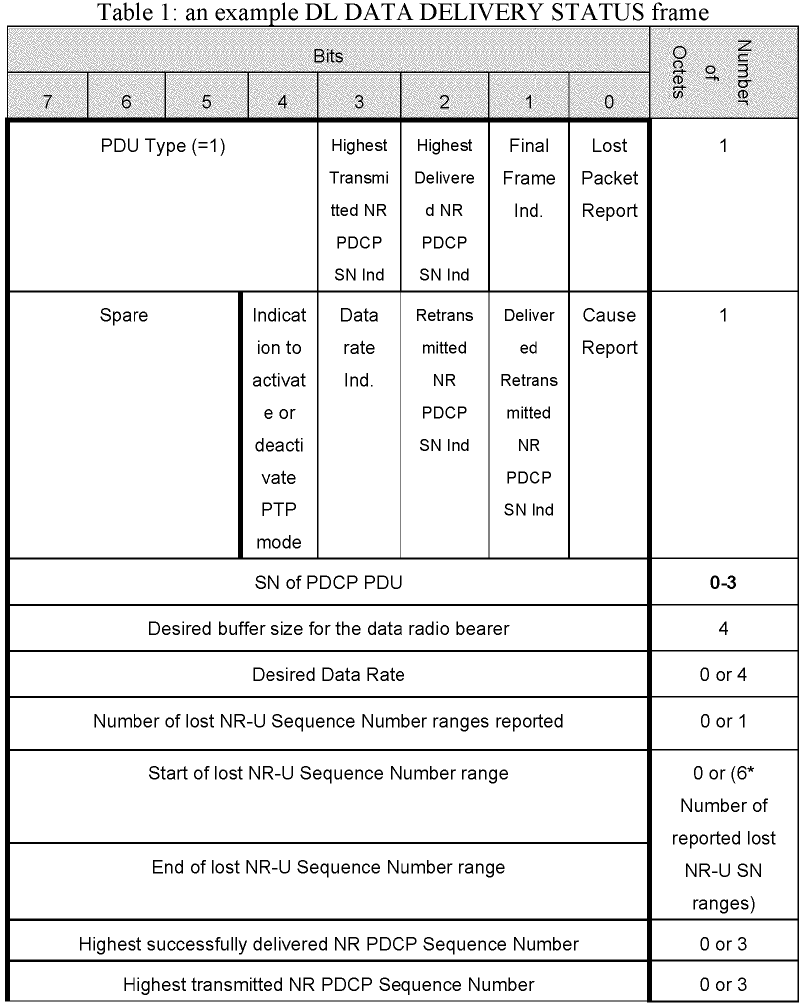

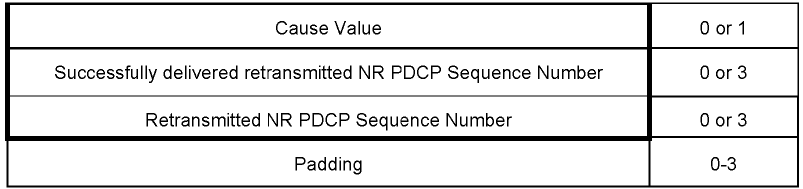

Referring to Table 1, in addition to the indication to activate or deactivate the PTP mode and the SN of the PDCP PDU, the DL DATA DELIVERY STATUS frame may also include the following parameters, which are the same as those defined in 3GPP standard document TS 38.425:
- Lost Packet Report: this parameter indicates the presence of number of lost NR user plane (NR-U) sequence number ranges reported, start of lost NR-U sequence number range and end of lost NR-U sequence number range.
- Cause Report: this parameter indicates the presence of cause value. The cause value indicates specific events reported by the corresponding node.
- Final Frame Indication (i.e., Final Frame Ind): this parameter indicates whether the frame is the last downlink (DL) status report.
- Delivered Retransmitted NR PDCP SN Ind: this parameter indicates the presence of successfully delivered retransmitted PDCP sequence number.
- Highest Delivered NR PDCP SN Ind: this parameter indicates the presence of highest successfully delivered PDCP sequence number.
- Retransmitted NR PDCP SN Ind: this parameter indicates the presence of retransmitted PDCP sequence number.
- Highest Transmitted NR PDCP SN Ind: this parameter indicates the presence of the highest transmitted NR PDCP Sequence Number.
- Data Rate Indication: this parameter indicates the presence of the desired data rate.
- PDU Type: this parameter may be set to 1 for the data delivery status frame.
- Desired buffer size for the data radio bearer: this parameter indicates the desired buffer size in bytes for the concerned data radio bearer.
- Desired Data Rate: this parameter indicates the amount of data desired to be received in bytes in a specific amount of time for a specific data radio bearer established for the UE.
- Number of lost NR-U Sequence Number ranges reported: this parameter indicates the number of NR-U sequence number ranges reported to be lost.
- Start of lost NR-U Sequence Number range: this parameter indicates the start of an NR-U sequence number range reported to be lost.
- End of lost NR-U Sequence Number range: this parameter indicates the end of an NR-U sequence number range reported to be lost.
- Highest successfully delivered NR PDCP Sequence Number: this parameter indicates feedback about the in-sequence delivery status of NR PDCP PDUs at the corresponding node towards the UE.
- Highest transmitted NR PDCP Sequence Number: this parameter indicates the feedback about the transmitted status of NR PDCP PDU sequence at the corresponding node to the lower layers.
- Cause value: the parameter indicates specific events reported by the corresponding node.
- Successfully delivered retransmitted NR PDCP Sequence Number: this parameter indicates the NR PDCP PDU sequence number associated with the highest NR-U sequence number among the retransmission NR PDCP PDUs successfully delivered to the UE in sequence of NR-U sequence number.
- Retransmitted NR PDCP Sequence Number: this parameter indicates the NR PDCP PDU sequence number associated with the highest NR-U sequence number among the retransmission NR PDCP PDUs transmitted to the lower layers in sequence of NR-U sequence number.
- Padding: the padding is included at the end of the frame to ensure that the NR user plane protocol PDU length.

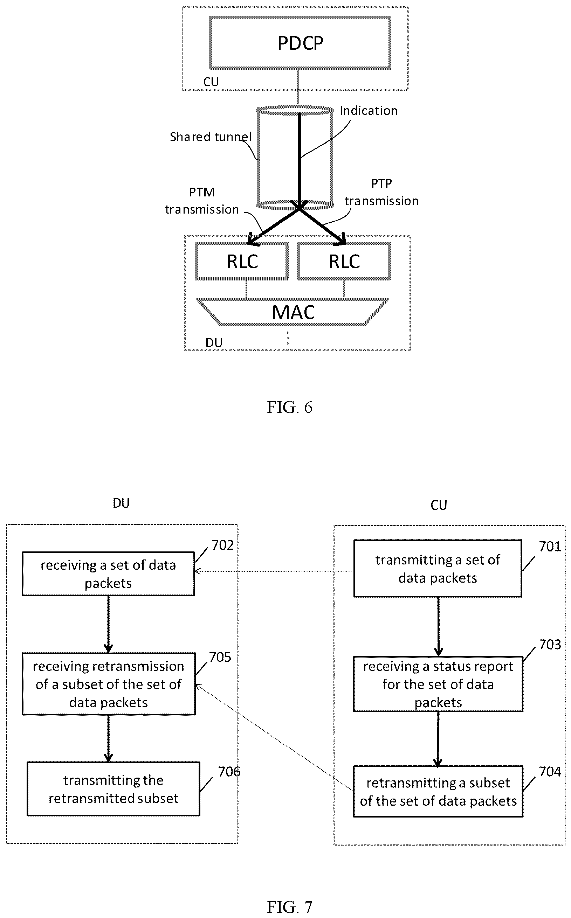

According to some other embodiments, the transmitting side may be a CU and the receiving side may be a DU. FIG. 6 illustrates an example of transmitting an indication to activate or deactivate a PTP mode from a CU to a DU according to some embodiments of the present application.

The CU and the DU in FIG. 6 may be the same as those in FIG. 5. The difference between FIG. 6 and FIG. 5 is that in FIG. 6, a shared tunnel for both PTM transmission and PTP transmission may be established between the CU and the DU. In an embodiment, the shared tunnel may be an F1-U GTP-U tunnel. The shared tunnel may be used for data to be transmitted to one or more UEs via a PTM mode and may also be used for data to be transmitted to a UE via a PTP mode.

After receiving data to be transmitted by a PTM mode via the shared tunnel from the CU, the DU may deliver the data to one RLC entity of the two RLC entities for the PTM transmission. After receiving data to be transmitted by a PTP mode to a UE via the shared tunnel from the CU, the DU may deliver the data to the other RLC entity of the two RLC entities for the PTP transmission. That is, the PTM transmission and the PTP transmission may have two different RLC entities (or RLC bearers).

In some embodiments, for a UE (e.g., UE 102a or UE 102b) to which data is being transmitted in a PTM mode, the CU may determine to activate a PTP mode for the UE. After determining to activate the PTP mode, the CU may transmit a data transmission indication to activate the PTP mode via the shared tunnel for PTP transmission and PTM transmission to the DU. The data transmission indication may be transmitted in a frame via a user plane protocol as shown in FIG. 2. In an embodiment, the frame may be a DL USER DATA frame as specified in 3GPP standard document TS 38.425. In another embodiment, the frame may be any other frame transmitted via the user plane protocol as shown in FIG. 2.

In the embodiments as illustrated in FIG. 6, since the shared tunnel is used for data transmission for one or more UEs, the frame need indicate the UE which is associated with the data transmission indication.

In an embodiment, the data transmission indication to activate the PTP mode may include an ID associated with the UE. In another embodiment, the data transmission indication to activate the PTP mode may be an ID associated with the UE. That is, the ID associated with the UE may be an implicit PTP activation indication. If the ID associated with the UE is present in the frame, the DU may treat it as a data transmission indication to activate the PTP mode. In yet another embodiment, in addition to an explicit data transmission indication to activate the PTP mode, the frame may further include an ID associated with the UE. The ID associated with the UE may be a UE ID or a UE index.

Then, after receiving the data transmission indication and/or ID associated with the UE, the DU may start to transmit the PDCP PDU(s) via the PTP leg or PTP RLC bearer to the UE indicated by the ID immediately.

In an embodiment, in addition to the data transmission indication and/or ID associated with the UE, the CU may also include an SN (or a count value) of a PDCP PDU in the frame. Then, after receiving the frame, the DU may start data transmission (i.e., transmitting at least one PDCP PDU) to the UE indicated by the ID included in the frame via a PTP leg (or via a PTP RLC bearer, or via an RLC entity for the PTP transmission) from the PDCP PDU indicated by the SN or the count value included in the frame. For example, assuming that the SN of PDCP PDU included in the frame is "5," after receiving the frame, the DU may transmit the PDCP PDU with an SN of "5" and its succeeding PDCP PDU(s) via a PTP leg (or via a PTP RLC bearer, or via an RLC entity for the PTP transmission) to the UE.

In some other embodiments, for a UE (e.g., UE 102a or UE 102b) to which data is being transmitted in a PTP mode, the CU may determine to deactivate the PTP mode for the UE (i.e., switch from the PTP mode to the PTM mode). After determining to deactivate the PTP mode, the CU may transmit a data transmission indication to deactivate the PTP mode via the shared tunnel for PTP transmission and PTM transmission to the DU. The indication may be transmitted in a frame via the user plane protocol as shown in FIG. 2. In an embodiment, the frame may be a DL USER DATA frame as specified in 3GPP standard document TS 38.425. In another embodiment, the frame may be any other frame transmitted via the user plane protocol as shown in FIG. 2.

Similarly, in order to indicate for which UE the PTP mode is deactivated, the data transmission indication to deactivate the PTP mode may include an ID associated with the UE, or the data transmission indication to deactivate the PTP mode may be an ID associated with the UE, or the frame including the data transmission indication may also include an ID associated with the UE. The ID associated with the UE may be a UE ID or a UE index.

Then, after receiving the data transmission indication and/or ID associated with the UE, the DU may stop to transmit the PDCP PDU(s) via the PTP leg or PTP RLC bearer to the UE indicated by the ID immediately.

In an embodiment, in addition to the data transmission indication and/or ID associated with the UE, the CU may also include an SN (or a count value) of a PDCP PDU in the frame. Then, after receiving the frame, the DU may stop data transmission (i.e., stop transmitting PDCP PDU(s)) to the UE indicated by the ID included in the frame via a PTP leg (or via a PTP RLC bearer, or via an RLC entity for the PTP transmission) from the PDCP PDU indicated by the SN or the count value included in the frame. For example, assuming that the SN of PDCP PDU included in the frame is "5," after receiving the frame, the DU may not transmit PDCP PDU with an SN of "5" and its succeeding PDCP PDU(s) via a PTP leg (or via a PTP RLC bearer, or via an RLC entity for the PTP transmission) to the UE.

The following Table 2 shows an example of a DL USER DATA frame, which includes the indication (e.g., the data transmission indication) to activate or deactivate the PTP mode, an ID associated with a UE, and an SN of a PDCP PDU.

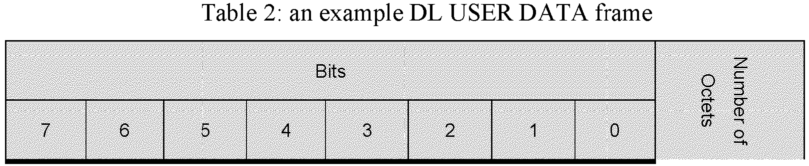

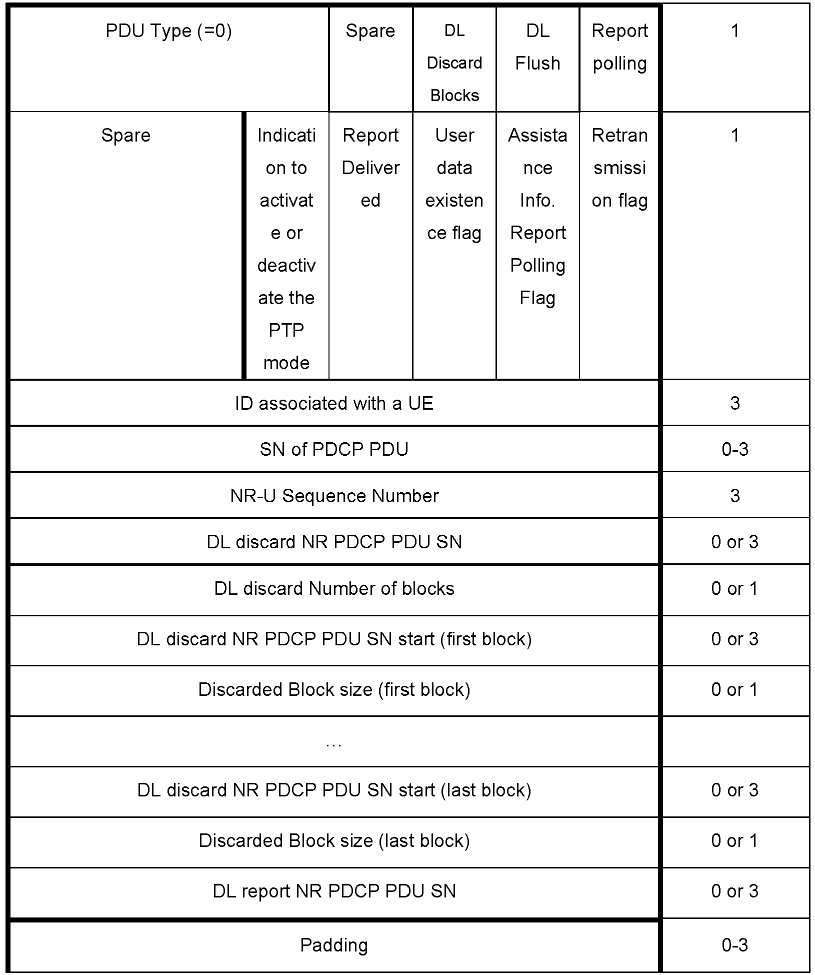

Referring to Table 2, in addition to the indication to activate or deactivate the PTP mode, an ID associated with a UE, and an SN of a PDCP PDU, the DL USER DATA frame may also include the following parameters, which are the same as those defined in 3GPP standard document TS 38.425:
- Report polling: this parameter indicates that the node hosting the NR PDCP entity requests providing the downlink delivery status report.
- DL Flush: this parameter indicates the presence of DL discard NR PDCP PDU SN.
- DL Discard Blocks: this parameter indicates the presence of DL discard Number of blocks, DL discard NR PDCP PDU SN start and Discarded Block size.
- Retransmission flag: this parameter indicates whether the NR PDCP PDU is a retransmission NR-U packet sent by the node hosting the NR PDCP entity to the corresponding node.
- Assistance Info. Report Polling Flag: this parameter parameter indicates that the node hosting the NR PDCP entity requests the corresponding node to send an ASSISTANCE INFORMATION DATA PDU.
- User data existence flag: this parameter indicates whether the node hosting the NR PDCP entity has some user data for the concerned data radio bearer.
- Report Delivered: this parameter indicates the presence of DL report NR PDCP PDU SN.
- NR-U Sequence Number: this parameter indicates the NR-U sequence number as assigned by the node hosting the NR PDCP entity.
- DL discard NR PDCP PDU SN: this parameter indicates the downlink NR discard PDCP PDU sequence number up to and including which all the NR PDCP PDUs should be discarded.
- DL discard Number of blocks: this parameter indicates the number of NR PDCP PDU blocks to be discarded.
- DL discard NR PDCP PDU SN start: this parameter indicates the starting SN of a downlink NR PDCP PDU block to be discarded.
- Discarded Block size: this parameter indicates the number of NR PDCP PDUs counted from the starting SN to be discarded.
- DL report NR PDCP PDU SN: this parameter indicates that the node hosting PDCP entity requests providing the down link delivery status report when the NR PDCP PDU with this sequence number has been successfully delivered.
- Padding: the padding is included at the end of the frame to ensure that the NR user plane protocol PDU length.

FIG. 7 is a flow chart illustrating a method for MBS according to some other embodiments of the present application. Although the method is illustrated in a system level by a CU (e.g., the CU shown in FIG. 2) and a DU (e.g., the DU in FIG. 2), persons skilled in the art can understand that the method implemented in the CU and that implemented in the DU can be separately implemented and incorporated by other apparatus with the like functions.

In the exemplary method shown in FIG. 7, at step 701, the CU may transmit a set of data packets associated with an MBS session to the DU. In an embodiment, a data packet may be a PDCP PDU. After receiving the set of data packets at step 702, the DU may transmit the set of data packets to a UE (e.g., UE 102a or UE 102b) via a PTM mode or via a PTP mode.

After receiving the set of data packets, the UE may transmit a status report (e.g., a PDCP status report) to the CU. The status report may indicate the receiving status of the set of data packets. For example, the status report may indicate which data packets of the set of data packets are successfully received and/or which data packets of the set of data packets are not successfully received by the UE.

After receiving the status report from the UE at step 703, the CU may identify the receiving status of the set of data packets. Then, at step 704, the CU may retransmit a subset of the set of data packets in response to the status report indicating that the subset is not successfully received by the UE to the DU. The subset may include a portion of data packets in the set of data packets or may include all data packets in the set of data packets.

After receiving retransmission of the subset of the set of data packets from the CU at step 705, the DU may transmit the retransmitted subset to the UE at a higher priority than new data packets at step 706.

In order to implement step 706, the DU need know which data packets are new data packets and which data packets are retransmitted data packets. Embodiments of the present application may provide several methods for the DU to identify the retransmitted data packets.

According to some embodiments of the present application, the subset of the set of data packets may be retransmitted via a retransmission tunnel.

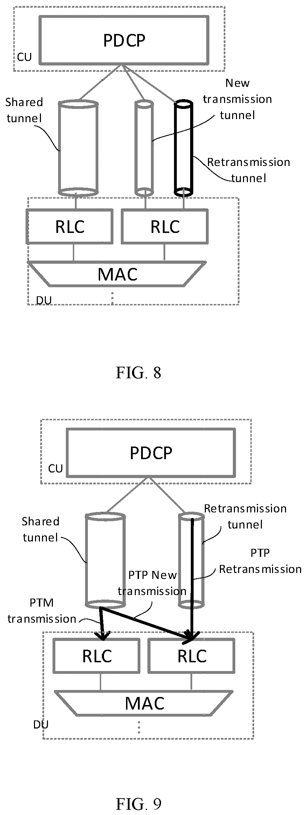

For example, FIG. 8 illustrates an example of data retransmission according to some embodiments of the present application. The CU and the DU shown in FIG. 8 may be the same as those shown in FIG. 5.

Referring to FIG. 8, a shared tunnel for PTM transmission may be established between the CU and the DU. The shared tunnel may be used to transmit data (e.g., PDCP PDU) to the DU such that DU may transmit the data to one or more UEs (e.g., UE 102a and UE 102b) by a PTM mode. The data received from the shared tunnel may be delivered to one RLC entity (or one RLC bearer) of the two RLC entities for the PTM transmission. In an embodiment, the shared tunnel may be an F1-U GTP-U tunnel.

For a UE (e.g., UE 102a or UE 102b), a new transmission tunnel and a retransmission tunnel may be established between the CU and the DU, respectively. The new transmission tunnel may be used to transmit new data packets to the DU such that the DU may transmit the new data packets to the UE by a PTP mode. The retransmission tunnel may be used to transmit retransmitted data packets to the DU such that the DU may transmit the retransmitted data packets to the UE by a PTP mode. The data packets received from the new transmission tunnel and the retransmission tunnel by the DU may be delivered to the other RLC entity of the two RLC entities for the PTP transmission. In an embodiment, the new transmission tunnel and the retransmission tunnel may be F1-U GTP-U tunnels.

Before retransmitting the subset of the set of data packets (even before transmitting the set of data packets, e.g., during an MBS bearer setup procedure), the CU may decide whether retransmission is needed or not for an MBS session or a radio bearer. If yes, the CU may transmit an indication for establishing a retransmission tunnel to the DU. After receiving the indication, the DU may allocates TNL information and transmit it back to the CU. In an embodiment of the present application, the TNL information may include an IP address and a GTP-U TEID.

Based on the TNL information, the retransmission tunnel may be established. Then, the CU may retransmit the subset of the set of data packets via the retransmission tunnel with the TNL information to the DU. The DU may identity that the subset is retransmitted data packets based on the TNL information. Then, the DU may transmit the subset of the set of data packets to the UE at a higher priority than new data packets.

FIG. 9 illustrates another example of data retransmission according to some other embodiments of the present application.

In the example of FIG. 9, the subset of the set of data packets may also be transmitted via a retransmission tunnel, which is the same as that shown in FIG. 8. The difference between FIG. 9 and FIG. 8 only lies in that in FIG. 9, the shared tunnel established between the CU and the DU is for both PTM transmission and PTP new data transmission. That is, the shared tunnel may be used for data packets to be transmitted to one or more UEs via a PTM mode and may also be used for new data packets to be transmitted to a UE via a PTP mode. In an embodiment, the shared tunnel may be an F 1-U GTP-U tunnel.

After receiving data packets to be transmitted by a PTM mode (i.e., PTM transmission) via the shared tunnel from the CU, the DU may deliver the data to one RLC entity of the two RLC entities for the PTM transmission. After receiving new data packets to be transmitted by a PTP mode (i.e., PTP new transmission) to a UE via the shared tunnel from the CU, the DU may deliver the data to the other RLC entity of the two RLC entities for the PTP transmission. After receiving data packets via the retransmission tunnel from the CU, the DU may identity that data packets are retransmitted data packets based on the TNL information of the retransmission tunnel and deliver the data packets to the same RLC entity as new data packets.

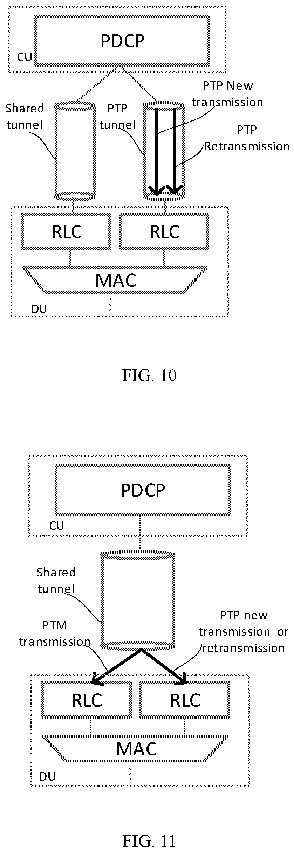

According to some other embodiments of the present application, the subset of the set of data packets may be retransmitted via a PTP tunnel for both PTP new data packet transmission and PTP data packet retransmission. For example, FIG. 10 illustrates an example of data retransmission according to some other embodiments of the present application. The CU and the DU shown in FIG. 10 may be the same as those shown in FIG. 5.

Referring to FIG. 10, a shared tunnel for PTM transmission may be established between the CU and DU. The shared tunnel may be used to transmit data (e.g., PDCP PDU) to the DU such that DU may transmit the data to one or more UEs (e.g., UE 102a and UE 102b) by a PTM mode. The data received from the shared tunnel may be delivered to one RLC entity of the two RLC entities for the PTM transmission. In an embodiment, the shared tunnel may be an F1-U GTP-U tunnel.

For a UE (e.g., UE 102a or UE 102b), a PTP tunnel for both PTP new data packet transmission and PTP data packet retransmission may be established between the CU and the DU.

In order to distinguish the new data packet and the retransmitted data packet, in an embodiment, the CU may transmit a retransmission indication in a packet header of each data packet in the retransmitted subset to indicate that the corresponding data packet is a retransmitted data packet. In an embodiment of the present application, the packet header may be a frame of a user plane protocol. The frame may be a DL USER DATA frame as specified in TS 38.425 or any other frame transmitted via the user plane protocol of the F1 interface between the CU and the DU. After receiving a retransmission indication in the frame of the user plane protocol of each data packet in the retransmitted subset, the DU may identify that the corresponding data packet in the retransmitted subset is a retransmitted data packet based on the retransmission indication.

According to some other embodiments of the present application, the subset of the set of data packets may be retransmitted via a shared tunnel for PTM transmission, PTP new data packet transmission, and PTP data packet retransmission. For example, FIG. 11 illustrates an example of data retransmission according to some other embodiments of the present application. The CU and the DU shown in FIG. 10 may be the same as those shown in FIG. 6.

Referring to FIG. 11, a shared tunnel for PTM transmission, PTP new data packet transmission, and PTP data packet retransmission may be established between the CU and the DU. In an embodiment, the shared tunnel may be an F1-U GTP-U tunnel. The shared tunnel may be used to transmit data (e.g., PDCP PDU) to the DU such that DU may transmit the data to one or more UEs (e.g., UE 102a and UE 102b) by a PTM mode. The data to be transmitted by a PTM mode may be delivered to one RLC entity (or one RLC bearer) of the two RLC entities for the PTM transmission.

The shared tunnel may also be used to transmit new data packets (e.g., PDCP PDUs) and retransmit data packets to the DU such that DU may transmit the new data packets and the retransmitted data packets to a UE (e.g., UE 102a or UE 102b) via a PTP mode. The new data packets and the retransmitted data packets to be transmitted by the DU may be delivered to the other RLC entity of the two RLC entities for the PTP transmission.

In the example of FIG. 11, since the shared tunnel is used for data transmission and retransmission for one or more UEs, in order to identify the UE to which the data is retransmitted, the CU may transmit an identity (ID) associated with the UE in a frame via the user plane protocol. The frame may be a DL USER DATA frame as specified in TS 38.425 or any other frame transmitted via the user plane protocol of the F1 interface between the CU and the DU. The ID associated with the UE may be a UE ID or a UE index.

In order to distinguish the new data packet and the retransmitted data packet, in addition to the ID associated with the UE, the frame may also include SN information associated with the retransmitted subset of the set of data packets. In an embodiment, the SN information may include a respective SN associated with each data packet in the retransmitted subset. In another embodiment, the SN information may include an SN range associated with the retransmitted subset.

Then, after receiving the retransmitted subset of the set of data packets and the frame including the UE ID and the SN information, the DU may identify that each data packet in the retransmitted subset is a retransmitted data packet based on the SN information and may know the UE for which the subset of the set of data packets is retransmitted.

The following Table 3 shows an example of a DL USER DATA frame, which includes an ID associated with a UE and SN information for the retransmitted subset of the set of data packets. In addition, in the example of Table 3, the DL USER DATA frame may also include a Retransmission SNs flag indicating the presence of the SN information.

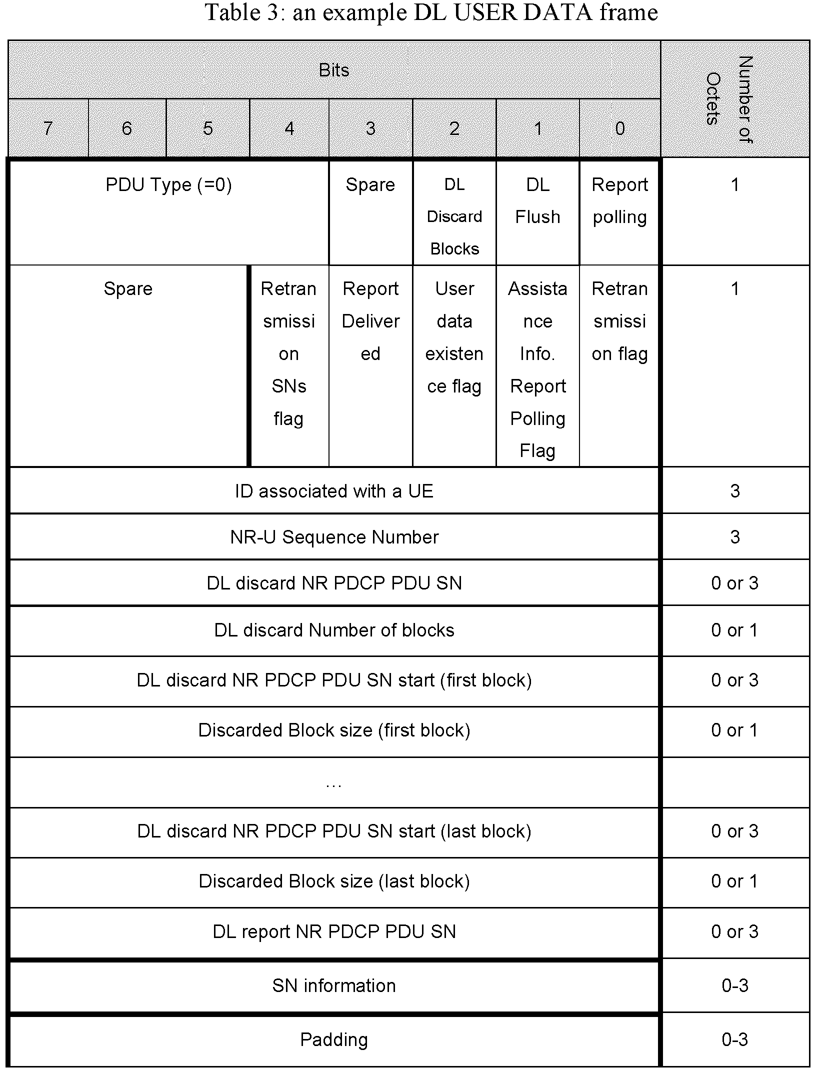

Referring to Table 3, in addition to the ID associated with the UE and SN information, the parameters included in the DL USER DATA frame may be the same as those defined in 3GPP standard document TS 38.425.

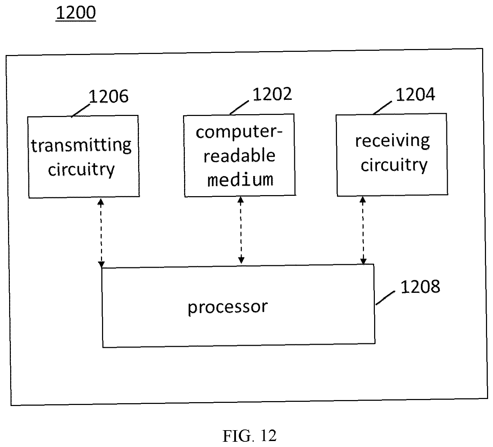

FIG. 12 illustrates a simplified block diagram of an apparatus for MBS according to some embodiments of the present application. The apparatus 1200 may be a CU or a DU as shown in FIG. 2.

Referring to FIG. 12, the apparatus 1200 may include at least one non-transitory computer-readable medium 1202, at least one receiving circuitry 1204, at least one transmitting circuitry 1206, and at least one processor 1208. In some embodiment of the present application, at least one receiving circuitry 1204 and at least one transmitting circuitry 1206 and be integrated into at least one transceiver. The at least one non-transitory computer-readable medium 1202 may have computer executable instructions stored therein. The at least one processor 1208 may be coupled to the at least one non-transitory computer-readable medium 1202, the at least one receiving circuitry 1204 and the at least one transmitting circuitry 1206. The computer executable instructions can be programmed to implement a method with the at least one receiving circuitry 1204, the at least one transmitting circuitry 1206 and the at least one processor 1208. The method can be a method according to an embodiment of the present application, for example, the method shown in FIG. 4 or 7.

The method according to embodiments of the present application can also be implemented on a programmed processor. However, the controllers, flowcharts, and modules may also be implemented on a general purpose or special purpose computer, a programmed microprocessor or microcontroller and peripheral integrated circuit elements, an integrated circuit, a hardware electronic or logic circuit such as a discrete element circuit, a programmable logic device, or the like. In general, any device on which resides a finite state machine capable of implementing the flowcharts shown in the figures may be used to implement the processor functions of this application. For example, an embodiment of the present application provides an apparatus for MBS, including a processor and a memory. Computer programmable instructions for implementing a method for MBS are stored in the memory, and the processor is configured to perform the computer programmable instructions to implement the method for MBS. The method may be a method as stated above or other method according to an embodiment of the present application.

An alternative embodiment preferably implements the methods according to embodiments of the present application in a non-transitory, computer-readable storage medium storing computer programmable instructions. The instructions are preferably executed by computer-executable components preferably integrated with a network security system. The non-transitory, computer-readable storage medium may be stored on any suitable computer readable media such as RAMs, ROMs, flash memory, EEPROMs, optical storage devices (CD or DVD), hard drives, floppy drives, or any suitable device. The computer-executable component is preferably a processor but the instructions may alternatively or additionally be executed by any suitable dedicated hardware device. For example, an embodiment of the present application provides a non-transitory, computer-readable storage medium having computer programmable instructions stored therein. The computer programmable instructions are configured to implement a method for MBS as stated above or other method according to an embodiment of the present application.

While this application has been described with specific embodiments thereof, it is evident that many alternatives, modifications, and variations may be apparent to those skilled in the art. For example, various components of the embodiments may be interchanged, added, or substituted in the other embodiments. Also, all of the elements of each figure are not necessary for operation of the disclosed embodiments. For example, one of ordinary skills in the art would be enabled to make and use the teachings of the application by simply employing the elements of the independent claims. Accordingly, embodiments of the application as set forth herein are intended to be illustrative, not limiting. Various changes may be made without departing from the spirit and scope of the application.

Further aspects of the invention are provided by the subject matter of the following numbered clauses:
1. A method performed by a node of a wireless network to provide a multicast and broadcast service (MBS) associated with a user equipment (UE) of the wireless network, the method comprising: determining whether to activate or deactivate a point-to-point (PTP) mode to provide the MBS to the UE; and transmitting a data transmission indication via a user plane protocol of a network interface in the wireless network to activate or deactivate the PTP mode.
2. The method of clause 1, wherein the data transmission indication is transmitted via an individual tunnel for PTP transmission.
3. The method of clause 1, wherein the data transmission indication is transmitted via a shared tunnel for PTP transmission and point-to-multipoint (PTM) transmission.
4. The method of clause 3, wherein the data transmission indication is transmitted in a frame via the user plane protocol and comprises an identity (ID) associated with the UE. #5. A method performed by a node of a wireless network to provide a multicast and broadcast service (MBS) associated with a user equipment (UE) of the wireless network, the method comprising: receiving a data transmission indication via a user plane protocol of a network interface in the wireless network to activate or deactivate a point-to-point (PTP) mode to provide the MBS to the UE.
6. The method of clause 5, wherein the data transmission indication is received via an individual tunnel for PTP transmission.
7. The method of clause 5, wherein the data transmission indication is received via a shared tunnel for PTP transmission and point-to-multipoint (PTM) transmission.
8. The method of clause 7, wherein the data transmission indication is received in a frame via the user plane protocol and comprises an identity (ID) associated with the UE.
9. A method, comprising: transmitting a set of data packets associated with a multicast and broadcast services (MBS) session; receiving a status report for the set of data packets; and retransmitting a subset of the set of data packets in response to the status report indicating that the subset is not successfully received by a user equipment (UE).
10. The method of clause 9, further comprising: transmitting an indication for establishing a retransmission tunnel; and receiving transport network layer (TNL) information of the retransmission tunnel.
11. The method of clause 9, wherein the subset is retransmitted via a PTP tunnel for both PTP new data packet transmission and PTP data packet retransmission.
12. The method of clause 9, wherein the subset is retransmitted via a shared tunnel for point to multipoint (PTM) transmission, PTP new data packet transmission, and PTP data packet retransmission.
13. A method, comprising: receiving a set of data packets associated with a multicast and broadcast services (MBS) session; receiving retransmission of a subset of the set of data packets; and transmitting the retransmitted subset at a higher priority than new data packets.
14. The method of clause 13, further comprising: receiving an indication for establishing a retransmission tunnel; and transmitting transport network layer (TNL) information of the retransmission tunnel.
15. An apparatus, comprising: at least one non-transitory computer-readable medium having computer executable instructions stored therein; at least one receiving circuitry; at least one transmitting circuitry; and at least one processor coupled to the at least one non-transitory computer-readable medium, the at least one receiving circuitry and the at least one transmitting circuitry; wherein the computer executable instructions are programmed to implement a method according to any one of clauses 1-14 with the at least one receiving circuitry, the at least one transmitting circuitry and the at least one processor.

## Claims

1. A method, comprising:
transmitting a set of data packets associated with a multicast and broadcast services (MBS) session;
receiving a status report for the set of data packets; and
retransmitting a subset of the set of data packets in response to the status report indicating that the subset is not successfully received by a user equipment (UE).

2. The method of claim 1, further comprising:
transmitting an indication for establishing a retransmission tunnel; and
receiving transport network layer (TNL) information of the retransmission tunnel.

3. The method of claim 1, wherein the subset is retransmitted via a PTP tunnel for both PTP new data packet transmission and PTP data packet retransmission.

4. The method of claim 1, wherein the subset is retransmitted via a shared tunnel for point to multipoint (PTM) transmission, PTP new data packet transmission, and PTP data packet retransmission.

5. An apparatus, comprising:
at least one non-transitory computer-readable medium having computer executable instructions stored therein;
at least one receiving circuitry;
at least one transmitting circuitry; and
at least one processor coupled to the at least one non-transitory computer-readable medium, the at least one receiving circuitry and the at least one transmitting circuitry;
wherein the computer executable instructions are programmed to:
transmit a set of data packets associated with a multicast and broadcast services (MBS) session;
receive a status report for the set of data packets; and
retransmit a subset of the set of data packets in response to the status report indicating that the subset is not successfully received by a user equipment (UE).

6. The apparatus of claim 5, wherein the computer executable instructions are further programmed to:
transmit an indication for establishing a retransmission tunnel; and
receive transport network layer (TNL) information of the retransmission tunnel.

7. The apparatus of claim 5, wherein the subset is retransmitted via a PTP tunnel for both PTP new data packet transmission and PTP data packet retransmission.

8. The apparatus of claim 5, wherein the subset is retransmitted via a shared tunnel for point to multipoint (PTM) transmission, PTP new data packet transmission, and PTP data packet retransmission.

9. A processor for wireless communication, the processor being arranged to:
transmit a set of data packets associated with a multicast and broadcast services (MBS) session;
receive a status report for the set of data packets; and
retransmit a subset of the set of data packets in response to the status report indicating that the subset is not successfully received by a user equipment (UE).

10. The processor of claim 9, further arranged to:
transmit an indication for establishing a retransmission tunnel; and
receive transport network layer (TNL) information of the retransmission tunnel.

11. The processor of claim 9, wherein the subset is retransmitted via a PTP tunnel for both PTP new data packet transmission and PTP data packet retransmission.

12. The processor of claim 9, wherein the subset is retransmitted via a shared tunnel for point to multipoint (PTM) transmission, PTP new data packet transmission, and PTP data packet retransmission.
